# FASCICULE DE BREVET EUROPEEN

(11) **EP 3 067 247 B1**
(45) Date de publication et mention de la délivrance du brevet: **24.01.2018**
(21) Numéro de dépôt: 16154917.5
(22) Date de dépôt: 09.02.2016
(51) Int. Cl.: B62D 1/183

(54) **ENSEMBLE DE COLONNE DE DIRECTION ESCAMOTABLE POUR VEHICULE**
VERSENKBARE LENKSÄULENEINHEIT FÜR FAHRZEUG
RETRACTABLE STEERING COLUMN ASSEMBLY FOR VEHICLE

(30) Priorité: 05.03.2015 FR 1551851
(43) Date de publication de la demande: 14.09.2016
(73) Titulaire: PSA Automobiles SA, 78300 Poissy (FR)
(72) Inventeur: BOYE, LAURENT, 78000 VERSAILLES (FR); BRUCAMP, GABRIEL, 78210 ST CYR L ECOLE (FR); MICHEL, THIERRY, 78110 LE VESINET (FR)

(56) Documents cités:
- EP-A2- 2 840 000
- EP-B1- 0 832 024
- FR-A1- 2 779 695
- FR-A1- 2 806 042
- US-A1- 2014 277 896
- US-B2- 8 899 623

## Description

La présente invention concerne un ensemble de colonne de direction escamotable pour véhicule. Elle concerne également un véhicule, en particulier un véhicule automobile, équipé d'un tel ensemble de colonne de direction escamotable.

De façon classique, un ensemble de colonne de direction pour véhicule, en particulier pour véhicule automobile, comprend un support ou corps de colonne de direction relié à un organe solidaire de la caisse du véhicule constitué par une traverse de tableau de bord, laquelle est elle-même solidaire de la traverse inférieure de baie s'étendant sous le bord inférieur du pare-brise.

Sur un tel ensemble, sont prévus des moyens de positionnement, de maintien et éventuellement de réglage de la colonne de direction, qui sont solidaires de la traverse de tableau de bord. Le document US 8 899 623 B2 divulgue les caractéristiques du préambule de la revendication 1.

A titre d'exemple, le document FR 2 794 419 décrit un ensemble de colonne de direction escamotable pour véhicule automobile, qui comprend un corps de colonne de direction relié à un support fixe par des moyens de réglage de la position de ce corps par rapport au support. Le corps de colonne est déplaçable entre une position abaissée d'utilisation normale de la colonne, et une position relevée facilitant l'accès à un poste de conduite du véhicule. Le corps de colonne est relié aux moyens de réglage par des moyens de verrouillage libérables distincts des moyens de réglage. Les moyens de réglage comprennent un organe fixe, qui est relié au support, et un organe mobile. Les moyens de verrouillage sont portés par le corps de colonne et l'organe mobile. Les moyens de réglage comprennent, de plus, des moyens de serrage des organe fixe et mobile entre eux dans une position relative sélectionnée de ces organes, portés par une broche traversant deux orifices ménagés dans ces organes fixe et mobile. Les deux orifices forment des boutonnières de réglage de la position du corps de colonne dans des première et seconde directions sensiblement orthogonales entre elles, notamment une première direction horizontale sensiblement parallèle à l'axe de la colonne et une seconde direction verticale.

A titre d'exemple également, le document FR 2 964 637 décrit un mécanisme de colonne de direction réglable comportant un support escamotable, un corps de colonne de direction définissant un axe de rotation d'un arbre de colonne de direction, un mécanisme de guidage entre le corps de colonne de direction et le support escamotable pour guider un mouvement de réglage de position du corps de colonne de direction par rapport au support escamotable dans une plage de réglage, des moyens de verrouillage du corps de colonne de direction par rapport au support escamotable dans une pluralité de positions de réglage dans la plage de réglage, et un organe de liaison cinématique entre le support escamotable et un support fixe par rapport à une superstructure du véhicule pour guider un mouvement d'escamotage du support escamotable par rapport au support fixe entre une position de conduite et une position escamotée dans un repère lié au support fixe. Ce mécanisme de colonne de direction comporte, de plus, un moteur d'entraînement du support escamotable entre la position de conduite et la position escamotée.

Le but de la présente invention est de fournir un ensemble de colonne de direction pour véhicule, qui soit escamotable et, par conséquent, facilite l'entrée et la sortie du conducteur dans son véhicule, améliore l'accueil du conducteur dans son véhicule et lui rende accessible de nouvelles activités à l'arrêt du véhicule, telles, par exemple, que des activités de bureau, de lecture ou d'utilisation d'écrans,

Un autre but de la présente invention est de fournir un tel ensemble de colonne de direction escamotable, qui apporte des avantages lorsqu'il est monté sur un véhicule autonome, c'est-à-dire un véhicule capable de rouler automatiquement et en toute autonomie dans un trafic réel et sur une infrastructure sans l'intervention d'un être humain.

C'est également un but de la présente invention de fournir un tel ensemble de colonne de direction escamotable pour véhicule, qui soit de conception, de fabrication et d'utilisation simples, et qui améliore l'ergonomie du poste de conduite du véhicule.

Pour parvenir à ces buts, la présente invention a pour objet un ensemble de colonne de direction escamotable pour véhicule, comprenant un corps de colonne de direction monté sur un support solidaire de la caisse du véhicule, et un mécanisme de réglage de la position du volant. Cet ensemble, nouveau, comprend un mécanisme de déplacement linéaire du corps de colonne de direction par rapport au support solidaire de la caisse du véhicule, intercalé directement entre le corps de colonne de direction et ledit support, qui permet de faire passer l'ensemble d'une position dite « normale », dans laquelle le volant est en position réglée, à une position dite « d'escamotage », dans laquelle le volant est rétracté vers la planche de bord du véhicule.

De préférence, le mécanisme de déplacement linéaire comporte, de plus, un système de verrouillage/déverrouillage de l'escamotage de la colonne de direction et du volant.

Selon l'invention, le mécanisme de déplacement linéaire du corps de colonne de direction par rapport au support solidaire de la caisse du véhicule comprend deux tubes de guidage, qui s'étendent longitudinalement selon la direction de déplacement du corps de colonne par rapport au support solidaire de la caisse du véhicule, des moyens de fixation des deux tubes de guidage sur le support solidaire de la caisse du véhicule, des paliers de guidage, qui sont destinés à se déplacer sur les des deux tubes de guidage et qui sont solidaires du corps de colonne de direction, et des moyens de fixation des paliers de guidage sur le corps de colonne de direction.

De préférence, les moyens de fixation des deux tubes de guidage sur le support solidaire de la caisse du véhicule sont constitués, pour chaque tube de guidage, par un support de tube, qui supporte l'une et l'autre extrémités du tube de guidage et qui est fixé sur un support de colonne correspondant, lui-même rigidement fixé sur le support solidaire de la caisse du véhicule.

De préférence également, les moyens de fixation des paliers de guidage sur le corps de colonne de direction peuvent avantageusement être constitués par deux platines de fixation avant et arrière, rigidement fixées sur le corps de colonne de direction, les paliers de guidage étant alors fixés sur lesdites platines de fixation avant et arrière.

Le système de verrouillage/déverrouillage de l'escamotage de la colonne de direction et du volant comprend, d'une part, un support de serrure solidaire du support solidaire de la caisse du véhicule et une serrure montée sur ledit support de serrure, et d'autre part, une gâche rigidement fixée au corps de colonne de direction.

Le support solidaire de la caisse du véhicule est, de préférence, la traverse de tableau de bord, laquelle est solidaire de la traverse inférieure de baie du véhicule par l'intermédiaire d'une liaison de traverse inférieure de baie.

Selon un mode de réalisation de l'invention, il peut être prévu une commande de serrure, reliée à la serrure et disposée dans l'habitacle du véhicule, qui permet, lorsqu'elle est actionnée, de déverrouiller le système de verrouillage/déverrouillage de l'escamotage de la colonne de direction.

La présente invention a aussi pour objet un véhicule, en particulier un véhicule automobile, qui comporte un ensemble de colonne de direction escamotable, la fonction d'escamotage de la colonne de direction et du volant étant activée par une action volontaire du conducteur du véhicule, et cet ensemble de colonne de direction escamotable étant conforme à celui décrit ci-dessus dans ses grandes lignes.

Selon une variante de réalisation, dans ce véhicule, la fonction d'escamotage de la colonne de direction et du volant étant activée, d'autres fonctions peuvent également être activées parmi lesquelles une ou plusieurs des fonctions suivantes : fonction de conduite automatisée, fonction de recul de siège, de confort postural, fonction d'interface homme machine d'aide à la conduite, fonction de vidéos d'information et/ou de divertissement.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est une vue en perspective, schématique, d'un mécanisme selon la présente invention de déplacement linéaire du corps de colonne de direction d'un véhicule automobile par rapport à la traverse de planche de bord du véhicule,
- la figure 2 est une vue en perspective, schématique, de la partie fixe du mécanisme de déplacement de la figure 1,
- la figure 3 est une vue en perspective, schématique, de la partie mobile du mécanisme de déplacement des figures 1 et 2,
- la figure 4 est une vue en perspective, schématique, illustrant les premières étapes du procédé d'assemblage des organes et pièces du mécanisme de déplacement des figures précédentes,
- la figure 5 est une vue de dessus, en perspective, schématique, illustrant la dernière étape du procédé d'assemblage des organes et pièces du mécanisme de déplacement des figures précédentes,
- la figure 6 est une vue en perspective, schématique, du mécanisme de déplacement des figures précédentes en position dite « normale » dans laquelle le volant est en position réglée,
- la figure 7 est une vue en perspective, schématique, du mécanisme de déplacement des figures précédentes en position dite « d'escamotage », dans laquelle le volant est rétracté vers la planche de bord du véhicule,
- la figure 8 est une vue en perspective, schématique, d'une variante dite « avec assistance », du système de verrouillage/déverrouillage de l'escamotage de la colonne de direction, en position normale, dans laquelle le volant est en position réglée, et
- la figure 9 est une vue en perspective, schématique, du système de verrouillage/déverrouillage de la figure 8, en position d'escamotage dans laquelle le volant est rétracté vers la planche de bord du véhicule.

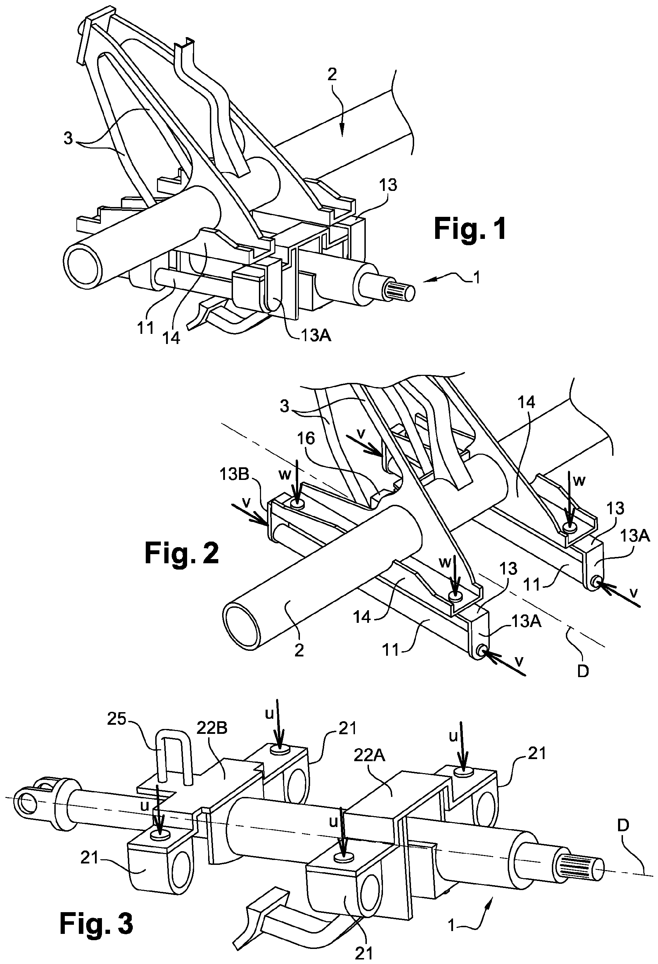

En référence au dessin de la figure 1, on a représenté, de façon schématique, un exemple d'ensemble de colonne de direction escamotable pour véhicule, selon la présente invention, qui comprend un corps de colonne de direction, désigné par la référence 1, en liaison avec un support solidaire de la caisse du véhicule, qui est la traverse de planche de bord, désignée par la référence 2. Entre le corps de colonne de direction 1 et la traverse de planche de bord 2 est intercalé un mécanisme de déplacement permettant le déplacement relatif linéaire du corps de colonne de direction 1 par rapport à la traverse de planche de bord 2 et, de cette façon, la réalisation d'une fonction d'escamotage de la colonne de direction et du volant de direction monté sur la colonne.

Il importe de noter que cette fonction d'escamotage est complémentaire de la fonction de réglage de la colonne de direction, classique, connue en soi et non décrite dans le présent texte.

Le mécanisme de déplacement linéaire du corps de colonne de direction 1 par rapport à la traverse de planche de bord 2 comporte une première partie, dite « partie fixe », rigidement liée à la caisse du véhicule, et une seconde partie, dite « partie mobile », rigidement liée au corps 1 de la colonne de direction du véhicule.

En référence principalement aux dessins des figures 1 et 2, la partie fixe comporte deux tubes de guidage, référencés collectivement 11, qui guident le déplacement relatif linéaire du corps 1 de la colonne de direction par rapport à la traverse de planche de bord 2. Ces deux tubes de guidage 11 s'étendent longitudinalement selon la direction de déplacement « D » (figure 2) du corps 1 de colonne de direction par rapport à la traverse de planche de bord 2.

Chaque tube de guidage 11 est relié rigidement à la traverse de planche de bord 2 par un support de tube référencé 13, qui supporte respectivement les extrémités avant et arrière du tube de guidage 11 et qui est fixé par vissage sur un support de colonne 14 correspondant, lui-même rigidement fixé, par soudage par exemple, sur la traverse de planche de bord 2 du véhicule.

Les deux supports de tube 13, supportant chacun un tube de guidage 11, présentent chacun la forme d'une barre plate terminée à ses deux extrémités par un retour sensiblement orthogonal constituant, ainsi, une sorte de patte de fixation avant 13A et de patte de fixation arrière 13B du tube de guidage 11.

Les flèches « v » illustrent les fixations par vissage des tubes de guidage 11 sur les supports de tube 13 correspondants. Les flèches « w » illustrent les fixations par vissage des supports de tube 13 sur les supports de colonne 14 correspondants.

La référence 3 désigne la liaison de traverse inférieure de baie, solidaire de la traverse de planche de bord 2 et destinée à former une entretoise sensiblement longitudinale entre la traverse de planche de bord 2 et la traverse inférieure de baie (non représentée), laquelle s'étend sous le bord inférieur du pare-brise du véhicule.

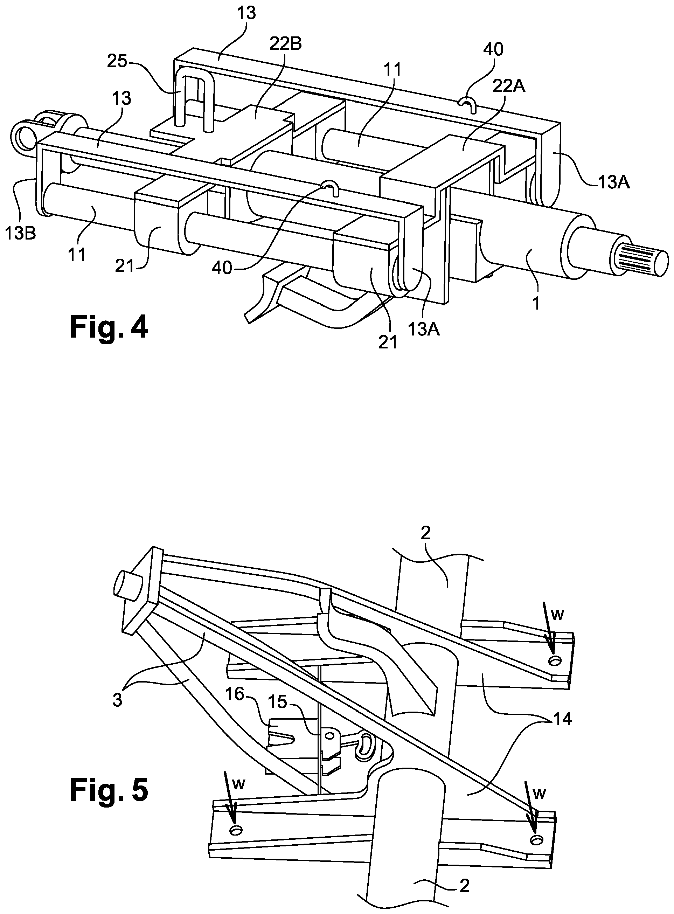

Les références 15 et 16 (figure 5) désignent deux organes d'un système de verrouillage/déverrouillage du mécanisme de déplacement, à savoir respectivement un support de serrure 15, solidaire des supports de colonne 14, et une serrure 16, montée sur le support de serrure 15.

En référence principalement aux dessins des figures 1 et 3, la partie mobile du mécanisme de déplacement selon l'invention comporte des paliers de guidage, référencés collectivement 21, qui sont destinés à se déplacer sur les deux tubes de guidage 11 et qui sont solidaires du corps de colonne de direction 1.

Ces paliers de guidage 21 sont fixés rigidement par vissage sur le corps de colonne de direction 1 par l'intermédiaire de deux platines de fixation avant et arrière, référencées 22A et 22B, elles-mêmes rigidement fixées sur le corps de colonne de direction 1.

Les flèches « u » illustrent les fixations par vissage des paliers de guidage 21 sur les platines de fixation 22A et 22B.

La référence 25 désigne la gâche du système de verrouillage/déverrouillage du mécanisme de déplacement évoqué précédemment, destinée à coopérer avec la serrure 16.

En référence aux figures 4 et 5, on a représenté les étapes du montage du mécanisme de déplacement décrit ci-dessus. Les tubes de guidage 11 et les supports de tube 13 sont montés avec la partie mobile du mécanisme et le corps 1 de colonne de direction (figure 4), la partie mobile comprenant, comme mentionné précédemment, les paliers de guidage 21 et les platines de fixation avant et arrière 22A et 22B. L'ensemble ainsi constitué, qui comprend, par conséquent, la partie mobile du mécanisme, les deux tubes de guidage 11 et les deux supports de tube 13, est ensuite amené d'un bloc, mis en position à l'aide de crochets 40 et enfin vissé (opération illustrée par les vissages « w » de la figure 5) sur les supports de colonne 14, eux-mêmes rigidement fixés à la traverse de planche de bord 2.

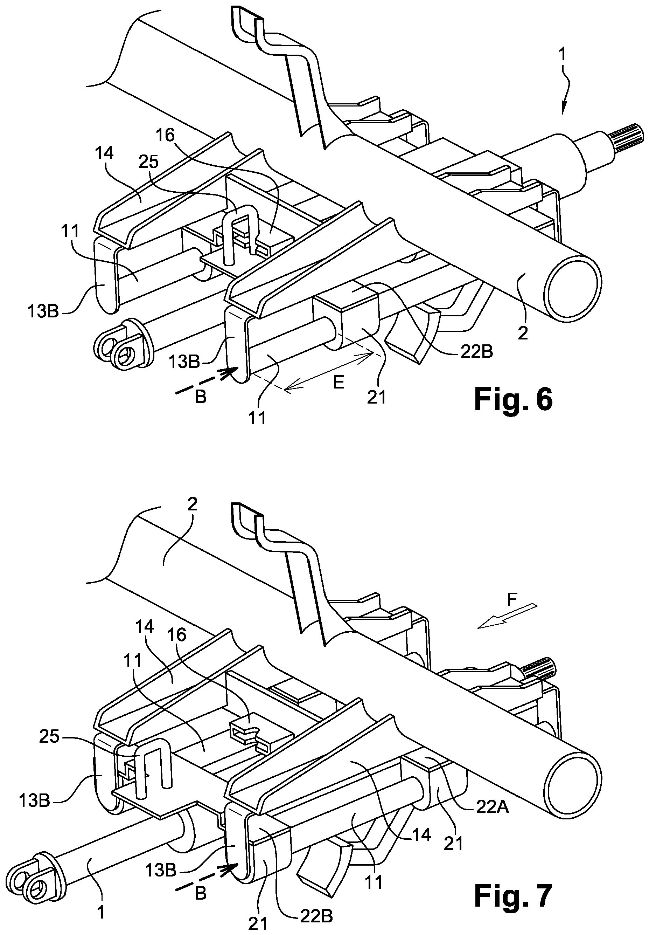

En référence aux dessins des figures 6 et 7, le mécanisme de déplacement fonctionne de la manière suivante :
A) La position normale, ou position réglée au sens du mécanisme de réglage, est représentée sur la figure 6. les paliers de guidage 21 sont dans une position telle qu'elle laisse une distance « E » entre la butée « B » du mouvement linéaire de la colonne de direction et le palier de guidage 21. La butée « B » est assurée par les pattes de fixation en retour du support de tube 13. La serrure 16, solidaire de la partie fixe du mécanisme, bloque la gâche 25, solidaire de la partie mobile du mécanisme.
B) Le conducteur actionne une commande (non représentée) de la serrure 16 et la relâche. La mécanisme de déplacement est alors déverrouillé, pour permettre l'escamotage de la colonne de direction et du volant.
C) le conducteur enfonce le volant vers la planche de bord jusqu'à la butée, par conséquent déplace (sens de la flèche « F » sur la figure 7) le corps de colonne de direction 1 par rapport à la traverse de planche de bord 2. L'ensemble de colonne de direction est en position rétractée.

Dans cette position rétractée (figure 7), la commande de réglage du volant n'est plus accessible et ne peut donc pas être utilisée.

La fonction rétractation du volant étant activée par une action volontaire du conducteur, des fonctions associées peuvent être activées une fois le volant en position rétractée, parmi lesquelles les fonctions suivantes :
- des fonctions dites de systèmes avancés d'aide à la conduite ou fonctions « ADAS » (acronyme de l'expression anglaise « Advanced Driver Assistance Systems »), telles que, par exemple, la conduite automatisée,
- des fonctions de confort postural (recul du siége par exemple),
- des fonctions dites d'interface homme machine d'aide à la conduite, ou
- des fonctions de vidéos d'information ou de divertissement.

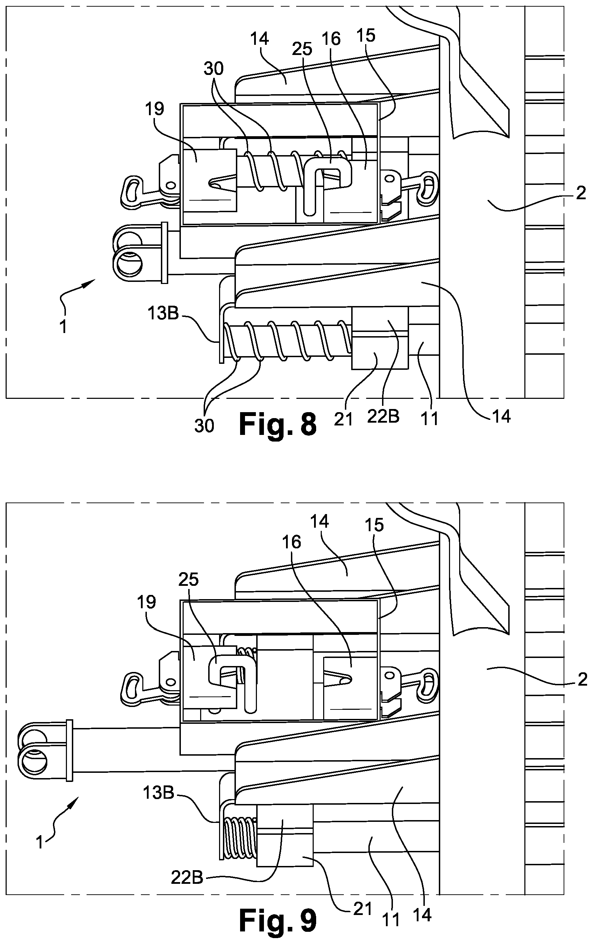

En référence aux dessins des figures 8 et 9, on a représenté une variante de réalisation du fonctionnement décrit ci-dessus, dans lequel est prévue une assistance au déplacement du mécanisme de l'invention. Selon cette variante de réalisation, il est prévu un moyen de rappel entre la partie fixe et la partie mobile du mécanisme, qui peut être, par exemple un ressort bandé, comme illustré par la référence 30. ou bien tout autre moyen équivalent tel qu'un vérin, par exemple. Ce moyen de rappel, une fois libéré, facilite la reprise en main du volant. Dans cette version, une serrure supplémentaire 19 permet de maintenir la colonne de direction en position d'escamotage, position dans laquelle le volant est rétracté vers la planche de bord du véhicule.

On notera que la fonction d'escamotage exposée ci-dessus n'est pas corrélée avec la fonction réglage du volant. La fonction réglage conserve sa commande classique sous la colonne de direction. Par conséquent, c'est une commande supplémentaire, qui est ajoutée pour la fonction d'escamotage.

L'ensemble de colonne de direction escamotable pour véhicule décrit ci-dessus, présente de nombreux avantages, parmi lesquels les avantages suivants :
- il améliore l'agrément et l'ergonomie du poste de conduite du véhicule, notamment en facilitant l'entrée et la sortie du conducteur dans son véhicule, en améliorant l'accueil et le confort du conducteur,
- il permet de rendre accessible au conducteur de nouvelles activités à l'arrêt du véhicule, par exemple des activités de bureau, de lecture de journaux, d'utilisation d'écrans,
- et, si cet ensemble nouveau de colonne de direction est monté sur un véhicule autonome au sens énoncé précédemment, il permet de valider le passage en mode autonome par une action volontaire du conducteur, de rendre accessible de nouveaux usages par un gain d'habilité en mode autonome, de valider de nouvelles fonctions, telles les fonctions de recul de siège, de lancement d'interface homme machine d'aide à la conduite ou de vidéos d'information et/ou de divertissement, et il permet enfin une reprise en main rapide de la conduite.

## Revendications

1. Ensemble de colonne de direction escamotable pour véhicule, comprenant un corps de colonne de direction (1) monté sur un support (2) solidaire de la caisse du véhicule, et un mécanisme de réglage de la position du volant, ledit ensemble comprenant, de plus, un mécanisme de déplacement linéaire du corps de colonne de direction (1) par rapport au support (2) solidaire de la caisse du véhicule, intercalé directement entre le corps de colonne de direction (1) et ledit support (2), qui permet de faire passer l'ensemble d'une position dite « normale » dans laquelle le volant est en position réglée à une position dite « d'escamotage » dans laquelle le volant est rétracté vers la planche de bord du véhicule, ledit ensemble étant **caractérisé en ce que** ledit mécanisme de déplacement linéaire du corps de colonne de direction (1) par rapport au support (2) solidaire de la caisse du véhicule comprend deux tubes de guidage (11), qui s'étendent longitudinalement selon la direction de déplacement (« D ») du corps de colonne de direction (1) par rapport au support (2) solidaire de la caisse du véhicule, des moyens de fixation desdits tubes de guidage (11) sur ledit support (2) solidaire de la caisse du véhicule, des paliers de guidage (21), qui sont destinés à se déplacer sur les deux tubes de guidage (11) et qui sont solidaires du corps de colonne de direction (1), et des moyens de fixation desdits paliers de guidage (21) sur le corps de colonne de direction (1).

2. Ensemble selon la revendication 1, **caractérisé en ce que** ledit mécanisme de déplacement linéaire comporte, de plus, un système de verrouillage/déverrouillage de l'escamotage de la colonne de direction et du volant.

3. Ensemble selon la revendication 1 ou 2, **caractérisé en ce que** les moyens de fixation desdits deux tubes de guidage (11) sur ledit support (2) solidaire de la caisse du véhicule, sont constitués, pour chaque tube de guidage (11), par un support de tube (13), qui supporte l'une et l'autre extrémités dudit tube de guidage (11) et qui est fixé sur un support de colonne (14) rigidement fixé sur le support (2) solidaire de la caisse du véhicule.

4. Ensemble selon l'une quelconque des revendications 1 à 3, **caractérisé en ce que** les moyens de fixation desdits paliers de guidage (21) sur le corps de colonne de direction (1) sont constitués par deux platines de fixation avant et arrière (22A, 22B), rigidement fixées sur le corps de colonne de direction (1), lesdits paliers de guidage (21) étant fixés sur lesdites platines de fixation avant et arrière (22A, 22B).

5. Ensemble selon l'une quelconque des revendications 2 à 4, **caractérisé en ce que** ledit système de verrouillage/déverrouillage de l'escamotage de la colonne de direction et du volant comprend, d'une part, un support de serrure (15) lié rigidement au support (2) solidaire de la caisse du véhicule et une serrure (16) montée sur ledit support de serrure (15), et d'autre part, une gâche (25) rigidement fixée au corps de colonne de direction (1).

6. Ensemble selon l'une quelconque des revendications 1 à 5, **caractérisé en ce que** le support (2) solidaire de la caisse du véhicule est la traverse de tableau de bord, solidaire de la traverse inférieure de baie du véhicule.

7. Ensemble selon la revendication 5, **caractérisé en ce qu'**elle comprend, de plus, une commande de serrure, reliée à la serrure (16) et disposée dans l'habitacle du véhicule, qui permet, lorsqu'elle est actionnée, de déverrouiller le système de verrouillage/déverrouillage de l'escamotage de la colonne de direction et du volant.

8. Véhicule, en particulier véhicule automobile, **caractérisé en ce qu'**il comporte un ensemble de colonne de direction avec une fonction d'escamotage de la colonne de direction et du volant activée par une action volontaire du conducteur du véhicule, et **en ce que** cet ensemble de colonne de direction est conforme à l'une quelconque des revendications précédentes.

9. Véhicule, en particulier véhicule automobile, selon la revendication 8, **caractérisé en ce que** la fonction d'escamotage de la colonne de direction et du volant étant activée, d'autres fonctions peuvent également être activées parmi lesquelles une ou plusieurs des fonctions suivantes : fonction de conduite automatisée, fonction de recul de siège, de confort postural, fonction d'interface homme machine d'aide à la conduite, fonction de vidéos d'information et/ou de divertissement.

## Patentansprüche

1. Versenkbare Lenksäuleneinheit, die einen Lenksäulenkörper (1) umfasst, der auf einen Träger (2) montiert ist, der fest mit dem Aufbau des Fahrzeugs verbunden ist, und einen Mechanismus zum Einstellen der Position des Lenkrads, wobei die Einheit außerdem einen Mechanismus zum linearen Verlagern des Lenksäulenkörpers (1) in Bezug auf den Träger (2), der fest mit dem Aufbau des Fahrzeugs verbunden ist, umfasst, der direkt zwischen dem Lenksäulenkörper (1) und dem Träger (2) eingefügt ist, der es erlaubt, die Einheit von einer sogenannten "normalen" Position, in der das Lenkrad in einer Position eingestellt ist, zu einer "Versenkung" genannten Position, in der das Lenkrad zu dem Armaturenbrett des Fahrzeugs zurückgezogen wird, übergehen zu lassen, Einheit **dadurch gekennzeichnet, dass** der Mechanismus zum linearen Verlagern des Lenksäulenkörpers (1) in Bezug auf den Träger (2), der mit dem Aufbau des Fahrzeugs fest verbunden ist, zwei Führungsröhren (11) umfasst, die sich längs entlang der Verlagerungsrichtung ("D") des Lenksäulenkörpers (1) in Bezug auf den Träger (2), der fest mit dem Aufbau des Fahrzeugs verbunden ist, erstrecken, Mittel zum Befestigen der Führungsröhren (11) auf dem Träger (2), der fest mit dem Aufbau des Fahrzeugs verbunden ist, Führungslager (21), die dazu bestimmt sind, sich auf den zwei Führungsröhren (11) zu verlagern und die fest mit dem Lenksäulenkörper (1) verbunden sind, und Mittel zum Befestigen der Führungslager (21) auf dem Lenksäulenkörper (1), umfasst.

2. Einheit nach Anspruch 1, **dadurch gekennzeichnet, dass** der Mechanismus zum linearen Verlagern außerdem ein Verriegelungs-/Entriegelungssystem des Versenkens der Lenksäule und des Lenkrads umfasst.

3. Einheit nach Anspruch 1 oder 2, **dadurch gekennzeichnet, dass** die Befestigungsmittel der zwei Führungsröhren (11) auf dem Träger (2), der fest mit dem Aufbau des Fahrzeugs verbunden ist, für jede Führungsröhre (11) aus einem Röhrenträger (13) bestehen, der das eine und das andere Ende der Führungsröhre (11) trägt und der auf einem Säulenträger (14) befestigt ist, der starr auf einem Träger (2), der fest mit dem Aufbau des Fahrzeugs verbunden ist, befestigt ist.

4. Einheit nach einem der Ansprüche 1 bis 3, **dadurch gekennzeichnet, dass** die Befestigungsmittel der Führungslager (21) auf dem Lenksäulenkörper (1) aus einer vorderen und einer hinteren (22A, 22B) Befestigungsplatte bestehen, die starr auf dem Lenksäulenkörper (1) befestigt sind, wobei die Führungslager (21) auf der vorderen und hinteren Befestigungsplatte (22A, 22B) befestigt sind.

5. Einheit nach einem der Ansprüche 2 bis 4, **dadurch gekennzeichnet, dass** das Verriegelungs-/Entriegelungssystem des Versenkens der Lenksäule und des Lenkrads einerseits einen Schlossträger (15), der starr mit dem Träger (2), der fest mit dem Aufbau des Fahrzeugs verbunden ist, verbunden ist, und ein Schloss (16), das auf den Schlossträger (15) montiert ist, und, andererseits, eine Türraste (25), die starr an dem Lenksäulenkörper (1) befestigt ist, umfasst.

6. Einheit nach einem der Ansprüche 1 bis 5, **dadurch gekennzeichnet, dass** der Träger (2), der fest mit dem Aufbau des Fahrzeugs verbunden ist, der Querträger des Armaturenbretts ist, das fest mit dem unteren Fensterquerträger des Fahrzeugs verbunden ist.

7. Einheit nach Anspruch 5, **dadurch gekennzeichnet, dass** sie außerdem eine Schlosssteuerung umfasst, die mit dem Schloss (16) verbunden und in dem Innenraum des Fahrzeugs angeordnet ist, die es, wenn sie betätigt wird, erlaubt, das Verriegelungs-/Entriegelungssystem des Versenkens der Lenksäule und des Lenkrads zu entriegeln.

8. Fahrzeug, insbesondere Kraftfahrzeug, **dadurch gekennzeichnet, dass** es eine Lenksäuleneinheit mit einer Versenkungsfunktion der Lenksäule und des Lenkrads umfasst, die von einer absichtlichen Betätigung des Fahrers des Fahrzeugs aktiviert wird, und dass diese Lenksäuleneinheit einem der vorhergehenden Ansprüche entspricht.

9. Fahrzeug, insbesondere Kraftfahrzeug, nach Anspruch 8, **dadurch gekennzeichnet, dass**, wenn die Versenkungsfunktion der Lenksäule und des Lenkrads aktiviert ist, andere Funktionen ebenfalls aktiviert werden können, darunter eine oder mehrere der folgenden Funktionen: Funktion des automatisierten Fahrens, Funktion des Sitzzurückschiebens, Haltungskomfort, Mensch-Maschinen-Schnittstellenfunktion zur Fahrunterstützung, Funktion für Informations-und/oder Unterhaltungsvideos.

## Claims

1. A retractable steering column assembly for a vehicle, including a steering column body (1), mounted on a support (2) integral with the body of the vehicle, and a mechanism for regulating the position of the steering wheel, said assembly including, in addition, a mechanism for the linear displacement of the steering column body (1) with respect to the support (2) integral with the body of the vehicle, interposed directly between the steering column body (1) and said support (2), which allows the assembly to be passed from a position designated "normal position", in which the steering wheel is in regulated position to a position designated "retraction position", in which the steering wheel is retracted toward the dashboard of the vehicle, said assembly being **characterized in that** said mechanism for linear displacement of the steering column body (1) with respect to the support (2) integral with the body of the vehicle includes two guide tubes (11), which extend longitudinally along the displacement direction ("D") of the steering column body (1) with respect to the support (2) integral with the body of the vehicle, fixing means of said guide tubes (11) on said support (2) integral with the body of the vehicle, guide bearings (21), which are intended to move on the two guide tubes (11) and which are integral with the steering column body (1), and means for fixing said guide bearings (21) on the steering column body (1).

2. The assembly according to Claim 1, **characterized in that** said mechanism for linear displacement comprises, in addition, a system for locking/unlocking the retraction of the steering column and of the steering wheel.

3. The assembly according to Claim 1 or 2, **characterized in that** the means for fixing said guide tubes (11) on said support (2) integral with the body of the vehicle are constituted, for each guide tube (11), by a tube support (13), which supports the one and the other ends of said guide tube (11) and which is fixed on a column support (14) rigidly fixed on the support (2) integral with the body of the vehicle.

4. The assembly according to any one of Claims 1 to 3, **characterized in that** the means for fixing said guide bearings (21) on the steering column body (1) are constituted by two, front and rear, fixing plates (22A, 22B), rigidly fixed on the steering column body (1), said guide bearings (21) being fixed on said front and rear fixing plates (22A, 22B).

5. The assembly according to any one of Claims 2 to 4, **characterized in that** said locking/unlocking system of the retraction of the steering column and of the steering wheel includes, on the one hand, a lock support (15) connected rigidly to the support (2) integral with the body of the vehicle, and a lock (16) mounted on said lock support (15), and on the other hand, a striker (25) rigidly fixed to the steering column body (1).

6. The assembly according to any one of Claims 1 to 5, **characterized in that** the support (2) integral with the body of the vehicle is the dashboard cross-member, integral with the lower windscreen cross-member of the vehicle.

7. The assembly according to Claim 5, **characterized in that** it includes, in addition, a lock control, connected to the lock (16) and disposed in the passenger compartment of the vehicle, which, when it is actuated, allows the unlocking of the locking/unlocking system of the retraction of the steering column and of the steering wheel.

8. A vehicle, in particular a motor vehicle, **characterized in that** it comprises a steering column assembly with a retraction function of the steering column and of the steering wheel, activated by an intentional action by the driver of the vehicle, and **in that** this steering column assembly is in accordance with any one of the preceding claims.

9. The vehicle, in particular motor vehicle, according to Claim 8, **characterized in that** the retraction function of the steering column and of the steering wheel being activated, other functions can also be activated, including one or more of the following functions: automated driving function, function for backward movement of the seat, postural comfort function, driver assistance man-machine interface function, information and/or entertainment videos function.
